# EUROPÄISCHE PATENTSCHRIFT

(11) **EP 1 051 567 B1**
(45) Veröffentlichungstag und Bekanntmachung des Hinweises auf die Patenterteilung: **19.01.2005**
(21) Anmeldenummer: 99958079.8
(22) Anmeldetag: 19.11.1999
(51) Int. Cl.: F02M 35/00

(54) **DROSSELKLAPPENSTUTZEN**
BUTTERFLY VALVE BODY
CORPS DE PAPILLON DES GAZ

(30) Priorität: 26.11.1998 DE 19854594
(43) Veröffentlichungstag der Anmeldung: 15.11.2000
(73) Patentinhaber: Siemens Aktiengesellschaft, 80333 München (DE)
(72) Erfinder: HANNEWALD, Thomas, D-64347 Griesheim (DE); SEEGER, Armin, D-65812 Bad Soden (DE)
(86) Internationale Anmeldenummer: PCT/EP1999/008887
(87) Internationale Veröffentlichungsnummer: WO 2000/031405

(56) Entgegenhaltungen:
- EP-A- 0 323 793
- EP-A- 0 483 569
- EP-A- 0 596 392
- EP-A- 0 701 057
- EP-A- 0 733 790
- WO-A-97/35131
- DE-A- 4 229 727
- DE-A- 4 343 377
- DE-A- 19 510 493
- DE-C- 19 755 497
- DE-U- 29 705 954
- FR-A- 2 606 115
- GB-A- 597 666
- GB-A- 2 067 719
- GB-A- 2 264 995

## Beschreibung

Die Erfindung betrifft einen Drosselklappenstutzen mit einem Gehäuse, insbesondere einen Drosselklappengehäuse, das von einem Gehäusedeckel verschließbar ist. wie z.B. aus der GB 2 323 410 A und der WO 97 35 131 A bekannt ist.

Ein Gehäuse eines Drosselklappenstutzens ist aus der DE 43 43 376 A1 bekannt. Ein solches Gehäuse eines Drosselklappenstutzens nimmt in der Regel eine Drosselklappe auf, die an einer Drosselklappenwelle, die drehbar gelagert ist, befestigt ist. Die Drehung der Drosselklappenwelle wird bewirkt durch die Betätigung eines Gaspedales, daß über Verbindungselemente wie Bowdenzüge oder dergleichen mit der Drosselklappenwelle verbunden ist, oder über einen Stellantrieb, der meistens über ein Untersetzungsgetriebe die Drosselklappenwelle antreibt. So ist zum Beispiel das Untersetzungsgetriebe und ein sogenanntes Drosselklappen-Potentiometer, das die gerade eingenommene Stellung der Drosselklappenwelle erfaßt, in dem Gehäuse angeordnet. Nach der Montage der beteiligten Bauteile ist es erforderlich, das Gehäuse mit einem Gehäusedekkel zu verschließen. Hierbei ist eine sehr gute Dichtheit zwischen dem Gehäuse und dem Gehäusedeckel erforderlich, da die beteiligten Bauelemente vor Verschmutzungen wie Öl und Benzin sowie Staub und Feuchtigkeit, zu schützen sind, da ansonsten mit Funktionsstörungen und im schlimmsten Fall mit Ausfällen zu rechnen ist.

Daher ist bei der DE 43 43 376 A1 schon eine Abdichtung zwischen einem Gehäuse und einem Gehäusedeckel vorgeschlagen worden, wobei das Gehäuse oder der Gehäusedeckel eine im Fügebereich randseitig umlaufende Nut und das andere Bauteil eine dazu korrespondierende glatte Auflagefläche aufweist und wobei in der Nut eine Dichtung in Form eines endlosen, in sich geschlossenen Rings mit im wesentlichen gleichbleibendem Querschnitt angeordnet und durch Zusammenpressen von Gehäuse und Gehäusedeckel elastisch verformt ist, bei dem die Dichtung unter Benutzung der umlaufenden Nut als formgebendes Werkzeugunterteil hergestellt ist. Daraus ergibt sich zwar der Vorteil, daß die Dichtung unabhängig von allfälligen Toleranzen bei der Nutherstellung immer exakt paßt und die Dichtung praktisch unverlierbar in der Nut festgehalten wird und ein besonderer Einlegevorgang mit allen Unwägbarkeiten entfallen kann.

Es bleibt jedoch der grundsätzliche Nachteil bestehen, daß eine Dichtung verwendet werden muß, so daß zusätzlich ein weiteres Teil hergestellt und montiert werden muß. Außerdem muß immer darauf geachtet werden, daß die Dichtung in einem solchen Maße zusammengedrückt wird, daß einerseits die erforderliche Dichtheit erreicht wird, andererseits die beteiligten Bauelemente beziehungsweise die Bereiche des Gehäuses und des Gehäusedeckels im Stoßbereich nicht durch ein zu starkes Zusammendrücken beschädigt werden, da dadurch die erforderliche Dichtheit verloren gehen könnte. Außerdem gestaltet sich die Formgebung für das Gehäuse und für den Gehäusedeckel kompliziert, da nicht nur die Aufnahmenut für die Dichtung vorgesehen werden muß, sondern auch Verbindungen zur Befestigung des Gehäusedeckels auf dem Gehäuse (wie Schraubverbindungen, Clipsverbindungen und dergleichen) berücksichtigt werden müssen. Dies ist insbesondere dann problematisch, wenn das Gehäuse und der Gehäusedeckel aus unterschiedlichen Materialien hergestellt sind.

Der Erfindung liegt daher die Aufgabe zugrunde, auf einfache Art und Weise eine dichtende Verbindung zwischen einem Gehäuse und einem Gehäusedeckel herzustellen, die einfach montierbar ist.

Diese Aufgabe ist durch die Merkmale des Patentanspruches 1 gelöst.

Erfindungsgemäß ist vorgesehen, daß sowohl das Gehäuse als auch der Gehäusedeckel aus Kunststoff bestehen und nach dem Zusammensetzen unlösbar miteinander verbunden werden. Der Einsatz von Kunststoff hat an dieser Stelle den Vorteil der Gewichtsersparnis und Korrosionsfestigkeit, was insbesondere beim Einsatz als Drosselklappenstutzen von besonderer Bedeutung ist. Außerdem erlaubt die Herstellung von Gehäusen und Gehäusedeckeln aus Kunststoff im Spritzgußverfahren eine komplexere Formgestaltung, als wie es beispielsweise im Aluminiumdruckgußverfahren möglich wäre. Außerdem gibt es bei gleichem Material für das Gehäuse und den Gehäusedeckel keine Probleme mit unterschiedlichen Ausdehnungskoeffizienten.

Die unlösbare Verbindung hat den Vorteil, daß damit im Stoßbereich oder Überlappungsbereich von Gehäuse und Gehäusedeckel eine absolut dichte Verbindung hergestellt wird. Damit sind die in dem Gehäuse angeordneten beteiligten Bauelemente (wie beispielsweise Untersetzungsgetriebe, Potentiometer und dergleichen) wirksam vor Verschmutzungen und Feuchtigkeit geschützt.

Ein weiterer Vorteil ist darin zu sehen, daß die in dem Gehäuse angeordneten beteiligten Bauelemente vor unberechtigtem Zugriff geschützt sind, das heißt, daß an diesen Bauelementen keine Manipulationen möglich sind. Dies ist insbesondere dann wichtig, wenn auch elektronische Bauelemente, beispielsweise zusammengefaßt in einer Steuereinheit mit Mikroprozessoren und Speichern und dergleichen, oder auch Sensoren in dem Gehäuse angeordnet sind. Da mit solchen Bauelementen beziehungsweise mit der Steuereinheit die Leistung der Brennkraftmaschine gesteuert beziehungsweise geregelt wird und nicht vom Hersteller des Drosselklappenstutzens beziehungsweise der Brennkraftmaschine vorgenommene Eingriffe untersagt sind, wird durch die unlösbare Verbindung eine wirksame Manipulationssicherung erzielt.

Um die unlösbare Verbindung zwischen dem Gehäuse und dem Gehäusedeckel herzustellen, kommen mehrere Verbindungsverfahren in Betracht.

Eine denkbare Verbindung ist eine Klebeverbindung, bei dem das Gehäuse und/oder der Gehäusedeckel im Stoßbereich beziehungsweise Überlappungsbereich mit einem Kleber versehen wird, der nach dem Zusammensetzen aushärtet. Denkbar ist auch, daß nach Herstellung des Gehäuses und des Gehäusedeckels entweder nur das Gehäuse oder nur der Gehäusedeckel oder beide mit einem Kleber versehen werden, der vor dem Zusammensetzen noch nicht aktiv ist. Erst wenn das Gehäuse und der Gehäusedeckel zusammengefügt sind, wird der Kleber aktiv oder aktiviert (beispielsweise mittels Infrarotbestrahlung).

Eine weitere Möglichkeit einer unlösbaren Verbindung bietet das Laserschweißen. Dabei werden der Gehäusedeckel und das Gehäuse zusammengefügt, ohne daß es zunächst zu einer unlösbaren Verbindung kommen würde. Erst nachdem der Stoßbereich oder der Überlappungsbereich zum Beispiel mit einem umlaufenden Laserstrahl behandelt worden ist, kommt es zu der unlösbaren Verbindung. Dabei bewirkt der Laserstrahl, daß die einander zugewandten Oberflächen des Gehäuses beziehungsweise des Gehäusedeckels im Stoßbereich beziehungsweise Überlappungsbereich derart auf eine Temperatur gebracht werden, daß eine Verschmelzung der einander zugewandten Oberflächen stattfindet. Der zum Einsatz kommende Kunststoff für das Gehäuse kann der gleiche oder ein anderer sein wie der Kunststoff, der für den Gehäusedeckel verwendet wird.

Die in etwa gleiche Vorgehensweise ergibt sich, wenn die unlösbare Verbindung mittels Ultraschallschweißen hergestellt wird. Anstelle eines Laserstrahles wird dann der Stoßbereich oder Überlappungsbereich zwischen dem Gehäuse und dem Gehäusedeckel mit einer Ultraschallquelle beaufschlagt.

Erfindungsgemäß wird in das Gehäuse und/oder in den Gehäusedeckel ein Stecker oder eine Buchse aus Kunststoff eingesetzt und mit diesem ebenfalls unlösbar verbunden. Das heißt, daß die unlösbare Verbindung mit dem Vorteil der absoluten Dichtheit nicht nur bei der Verbindung zwischen dem Gehäuse und dem Gehäusedeckel, sondern auch bei anderen Bauteilen wie ein Stecker, eine Buchse oder dergleichen, die in das Gehäuse beziehungsweise in den Gehäusedeckel eingesetzt werden, verwendet werden kann. Das Gleiche gilt auch für weitere beteiligte Bauelemente, wie zum Beispiel dem sogenannten Drosselklappen-Potentiometer. Wie schon ausgeführt erfaßt das Drosselklappen-Potentiometer die Drehung der Drosselklappenwelle und damit die aktuelle Position der Drosselklappe. Ein solches Drosselklappen-Potentiometer weist in der Regel eine Trägerplatte auf, auf der Widerstands- und/oder Kontaktbahnen aufgebracht sind. Diese Bahnen werden von einem Schleifer überstrichen, wobei der Schleifer zum Beispiel mit der Drosselklappenwelle verbunden ist. Das Drosselklappen-Potentiometer erzeugt in Abhängigkeit seiner Verschaltung eine sich in Abhängigkeit der Stellung der Drosselklappe verändernde Kennlinie, so daß die Kennlinie ein Maß für die jeweilige Stellung der Drosselklappe ist. Besteht nun die Trägerplatte des Drosselklappen-Potentiometers ebenfalls aus Kunststoff (zum Beispiel einem Thermoplast), ist es möglich, daß auch diese Trägerplatte mit dem Gehäuse (oder auch dem Gehäusedeckel) nach dem Zusammensetzen unlösbar miteinander verbunden wird.

Die vorliegende Erfindung wird am Beispiel eines Drosselklappenstutzens erläutert.

Es zeigen:
- Figur 1:: einen Drosselklappenstutzen in dreidimensionaler Schnittdarstellung,
- Figur 2:: den Drosselklappenstutzen gemäß Figur 1 im Querschnitt mit abgenommenem Deckel,
- Figur 3:: den Drosselklappenstutzen gemäß Figur 1 im Querschnitt mit aufgesetztem Deckel,
- Figur 4:: den Drosselklappenstutzen im Längsschnitt gemäß Figur 1,
- Figur 5:: den Drosselklappenstutzen gemäß Figur 1 in geschnittener, dreidimensionaler Ansicht,
- Figur 6:: den Drosselklappenstutzen im Schnitt in einer abgewandelten Ausführung gegenüber Figur 1,
- Figur 7:: den Drosselklappenstutzen im Längsschnitt gemäß Figur 1, mit einem Metallzylinder mit Innenkontur.

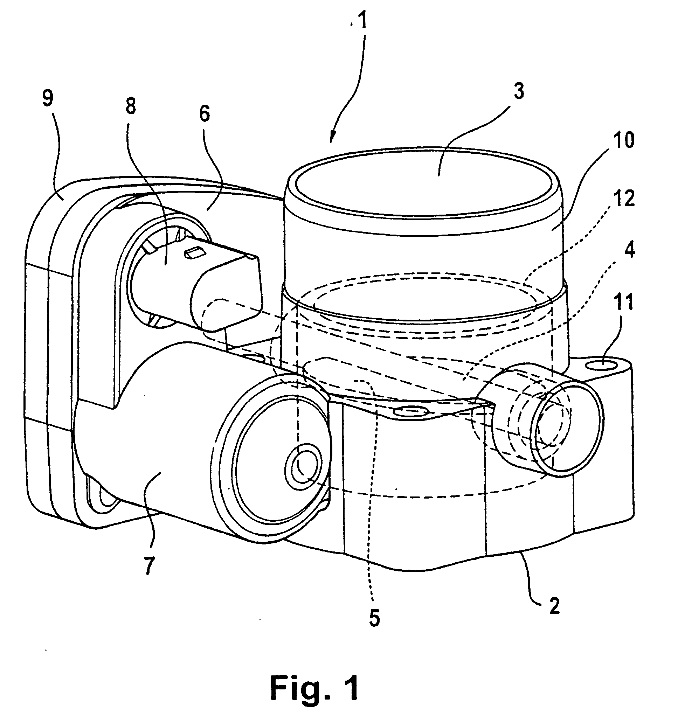

Figur 1 zeigt einen Drosselklappenstutzen 1 in dreidimensionaler Schnittdarstellung. Solche Drosselklappenstutzen dienen dazu, der Einspritzeinrichtung einer Brennkraftmaschine, insbesondere für ein Fahrzeug, Luft oder ein Kraftstoffluftgemisch zuzuführen. Zu diesem Zweck weist der Drosselklappenstutzen 1 ein Drosselklappengehäuse 2 auf, das aus Kunststoff, insbesondere in einem Spritzgußverfahren, hergestellt ist. In diesem Drosselklappengehäuse 2 ist ein Leitungsabschnitt 3 vorhanden, über den der nicht gezeigten Einspritzvorrichtung die Luft beziehungsweise das Kraftstoffluftgemisch zugeführt wird. Zur Einstellung des zuzuführenden Volumens ist auf einer Drosselklappenwelle 4 eine Drosselklappe 5 angeordnet, wobei durch Drehung der Drosselklappenwelle 4 auch die Drosselklappe 5 verschwenkt wird und den Querschnitt im Leitungsabschnitt 3 mehr oder weniger vergrößert beziehungsweise verkleinert und somit den Volumendurchsatz reguliert.

In einer einfachen Ausführung des Drosselklappenstutzens 1 ist ein Ende der Drosselklappenwelle 4 zum Beispiel mit einer Seilscheibe verbunden, wobei diese Seilscheibe wiederum über einen Bowdenzug mit einer Einstellvorrichtung für eine Leistungsanforderung verbunden ist, wobei die Einstellvorrichtung zum Beispiel das Gaspedal eines Fahrzeuges ist, so daß durch Betätigung dieser Einstellvorrichtung durch den Fahrer eines Fahrzeuges die Drosselklappe 5 von einer Stellung minimaler Öffnung, insbesondere einer Schließstellung, bis in eine Stellung maximaler Öffnung gebracht werden kann, um damit die Leistungsabgabe der Brennkraftmaschine einstellen zu können.

Bei dem in Figur 1 gezeigten Drosselklappenstutzen 1 handelt es sich um einen solchen Drosselklappenstutzen, bei dem die Drosselklappe 5 entweder in einem Teilbereich, zum Beispiel dem Leerlaufbereich, von einem Stellantrieb, ansonsten über das Gaspedal, einstellbar ist oder bei dem die Drosselklappe 5 über den gesamten Verstellbereich von einem Stellantrieb einstellbar ist. Bei diesen sogenannten "E-Gas"- oder "Drive-bywire"-Systemen wird die Leistungsanforderung zum Beispiel durch Niederdrücken des Gaspedales in ein elektrisches Signal umgesetzt, wobei dieses Signal einer Steuereinheit zugeführt wird, die dann ein Ansteuersignal für den Stellantrieb erzeugt. Das heißt, bei diesen genannten Systemen gibt es keine mechanische Verbindung zwischen der Sollwertvorgabe (Gaspedal) und der Drosselklappe 5.

Daher weist das Drosselklappengehäuse 2 des Drosselklappenstutzens 1 ein Getriebegehäuse 6 sowie ein Antriebsgehäuse 7 auf, wobei das Drosselklappengehäuse 2, das Getriebegehäuse 6 und das Antriebsgehäuse 7 eine einstückige Baueinheit bilden und im gleichen Herstellungsgang produziert werden. In dem Antriebsgehäuse 7 ist ein als Stellantrieb ausgebildeter Elektromotor (in Figur 1 nicht gezeigt) untergebracht, der über ein Untersetzungsgetriebe (in Figur 1 ebenfalls nicht gezeigt) auf die Drosselklappenwelle 4 wirkt, so daß durch Ansteuerung des Elektromotors die Drosselklappe 5 verschwenkt wird. Die Ansteuerung des Elektromotors erfolgt über einen in dem Getriebegehäuse 6 angeordneten Stecker 8, wobei der Drosselklappenstutzen 1 über den Stecker 8 mit einer Steuereinheit verbunden ist. Über den Stecker 8 erfolgt auch eine Rückmeldung der jeweiligen Position der Drosselklappe 5 an die Steuereinheit, wobei diese Steuereinheit durch Vergleich des Sollwertes (Gaspedal) mit dem Istwert für die Position der Drosselklappe 5 den Elektromotor regelt, bis die Differenz zwischen Sollwert und Istwert gleich Null ist. Die Ist-Position der Drosselklappe 5 kann durch einen entsprechenden Sensor, insbesondere ein sogenanntes Drosselklappen-Potentiometer, bei dem der Schleifer des Potentiometers mit der Drosselklappenwelle 4 verbunden ist, erfaßt werden.

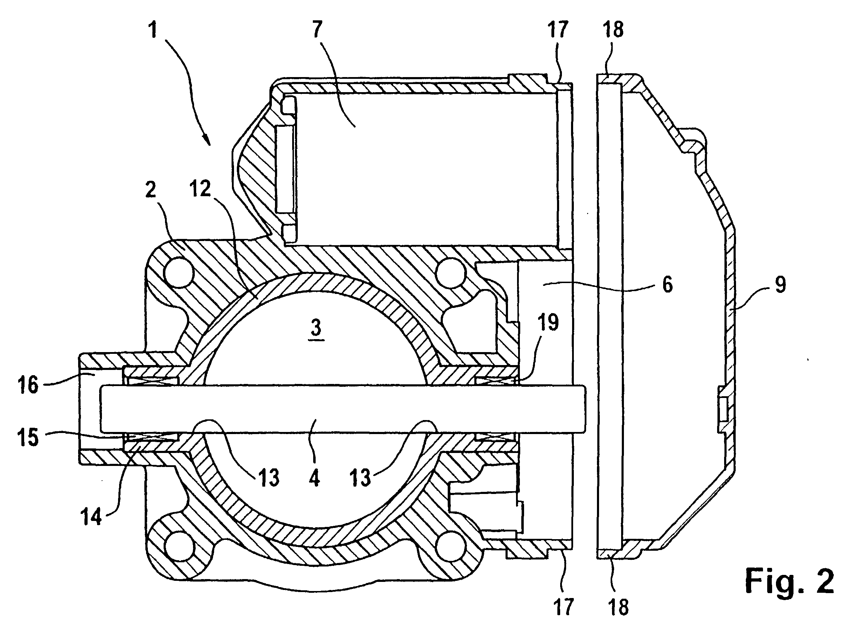

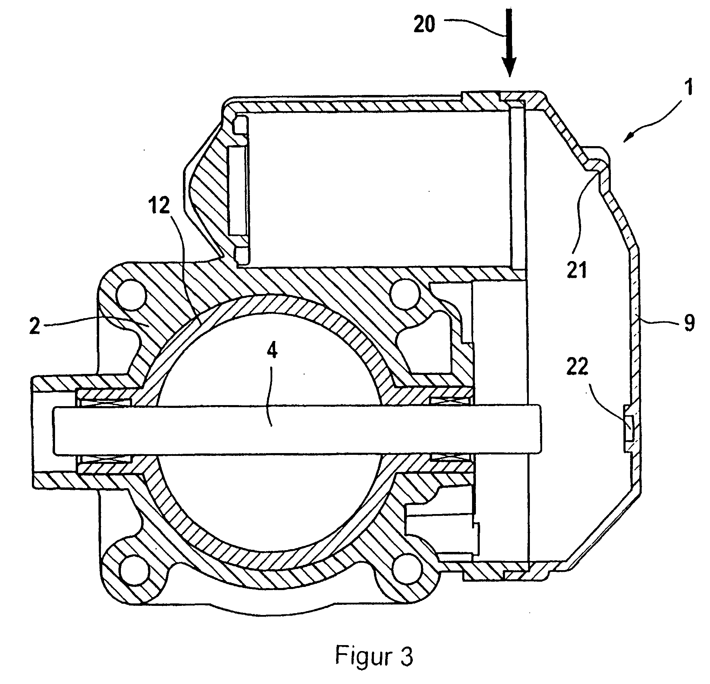

Das Getriebegehäuse 6 einschließlich des Antriebsgehäuses 7 wird von einem Gehäusedeckel 9 verschlossen. Die Ausgestaltung und Montage des Gehäusedeckels 9 wird in den Figuren 2 und 3 noch näher beschrieben.

Der Drosselklappenstutzen 1 ist in der Regel in einer Sauganlage der Brennkraftmaschine angeordnet und wird als Modul montiert, wozu der in Figur 1 gezeigte Drosselklappenstutzen 1 einen Flansch 10 aufweist, mit dem er über eine nicht gezeigte Saugleitung mit einem Ansaugluftfilter verbunden werden kann oder direkt mit diesem Ansaugluftfilter verbunden ist. Zur Befestigung des Drosselklappenstutzens 1 an der Einspritzvorrichtung mit der dem Flansch 10 abgewandten Seite sind Bohrungen 11 vorgesehen, mit dem der Drosselklappenstutzen 1 dichtend an die Einspritzvorrichtung angeschraubt werden kann. Die Art der Befestigung ist nur beispielhaft und nicht erfindungswesentlich.

Weiterhin ist in der dreidimensionalen Schnittdarstellung des Drosselklappenstutzens 1 ein gestrichelt gezeichneter Metallzylinder 12 in dem Leitungsabschnitt 3 angeordnet. Die Außenumfangsfläche des Metallzylinders 12 ist vollständig von dem Kunststoff des Drosselklappengehäuses 2 umgeben, wobei die metallene Innenwandung des Metallzylinders sich über den Verschwenkbereich der Drosselklappe 5, gegebenenfalls etwas weniger oder etwas mehr als dieser Verschwenkbereich, erstreckt. Verschiedene Ausgestaltungen des Metallzylinders 12 sind in den folgenden Figuren erkennbar.

Figur 2 zeigt den Drosselklappenstutzen 1 gemäß Figur 1 im Schnitt mit abgenommenem Gehäusedeckel 9. Sehr gut in diesem Querschnitt ist die Lage des Metallzylinders 12 erkennbar, der in einfacher Form ein Stück Rohr ist, das Durchführungen 13 für die Drosselklappenwelle 4 aufweist. Die Innenwandung des Metallzylinders 12 kann konturiert bearbeitet sein, um vorgegebene Kennlinien für den Volumendurchsatz durch den Leitungsabschnitt 3 in Abhängigkeit der Stellung der Drosselklappe 5 einstellen zu können. In Figur 2 ist eine Ausgestaltung des Metallzylinders 12 gezeigt, bei der der Metallzylinder 12 im Bereich der Durchführungen 13 jeweils einen Fortsatz 14 aufweist, wobei diese Fortsätze 14 Lager 15, 19 für die Drosselklappenwelle 4 aufnehmen. Damit erhöht sich die Montagefreundlichkeit, da nach dem Umspritzen des Metallzylinders 12 mit Kunststoff zur Formung des gesamten Drosselklappengehäuses 2 auch schon die Lager für die Drosselklappenwelle 4 zur Verfügung stehen. Die Drosselklappenwelle 4 endet - bei Betrachtung der Figur 2 auf der linken Seite - in einem Raum 16, in dem beispielsweise sogenannte Rückstellfedern und Notlauffedern untergebracht sein können. Die Rückstellfeder bewirkt eine Vorspannung der Drosselklappenwelle 4 in Schließrichtung, so daß der Stellantrieb gegen die Kraft dieser Rückstellfeder arbeitet. Eine sogenannte Notlauffeder bewirkt, daß bei Ausfall des Stellantriebes die Drosselklappe 5 in eine definierte Position gebracht wird, die in der Regel etwas oberhalb der Leerlaufdrehzahl liegt. Alternativ oder ergänzend dazu kann auch die Drosselklappenwelle 4 über den Raum 16 hinaus aus dem Drosselklappengehäuse 2 hervorstehen, wobei dann an diesem Ende der Drosselklappenwelle 4 zum Beispiel eine Seilscheibe montiert wird, die über einen Bowdenzug mit einem Gaspedal in Verbindung steht, womit eine mechanische Sollwertvorgabe realisiert ist. Das dem Raum 16 abgewandte Ende des Fortsatzes 14 (dessen Stirnfläche) kann zur Aufnahme weiterer Elemente wie zum Beispiel der Befestigung einer Trägerplatte des Drosselklappen-Potentiometers eingesetzt werden. Ebenso kann die Stirnfläche dieses Fortsatzes 14 oder weitere Fortsätze, deren Stirnflächen in das Getriebegehäuse 6 ragen, zur Aufnahme weiterer Elemente, wie zum Beispiel Steckwellen für Zahnräder oder Zahnsegmente des nicht gezeigten Getriebes, eingesetzt werden.

Das Drosselklappengehäuse 2 weist weiterhin in Richtung des Gehäusedeckels 9 zeigend eine umlaufende Abflachung 17 auf, die mit einem umlaufenden Steg des Gehäusedeckels 9 korrespondiert. Bisher war es so, daß der Gehäusedeckel 9 durch Verschrauben oder mittels Clipsverbindungen unter Zwischenlegung einer Dichtung mit dem Drosselklappengehäuse 2 verbunden wurde. Dies bedeutete einen hohen Aufwand, da bei der Herstellung der Form für das Drosselklappengehäuse 2 und den Gehäusedeckel 9 entsprechende Ausbildungen vorgesehen sein mußten. Außerdem bedeutete das Vorhandensein der Dichtung ein weiteres Bauteil und damit verbunden das Einlegen der Dichtung einen weiteren Montageschritt, was sich gerade bei der Serienproduktion von Drosselklappenstutzen als nachteilig herausstellte. Durch die umlaufende Abflachung 17 an dem Drosselklappengehäuse 2 und den umlaufenden Steg 18 an dem Gehäusedeckel 9 (oder umgekehrt), die schon bei der Herstellung für die Form des Drosselklappengehäuses 2 und des Gehäusedeckels 9 aus Kunststoff vorgesehen werden können, wird zunächst erreicht, daß nach dem Aufsetzen des Gehäusedeckels 9 eine definierte Lage auf dem Drosselklappengehäuse 2, gegebenenfalls unter leichtem Spiel, erzielt wird.

Figur 3 zeigt den Drosselklappenstutzen 1 gemäß Figur 1 im Querschnitt mit aufgesetztem Gehäusedeckel 9. Der Steg 18 liegt nun umlaufend über der Abflachung 17, die sich damit beide überlappen. Auf diesen Bereich dieser Überlappung wird jetzt umlaufend ein Laserstrahl 20 gerichtet, der so ausgerichtet und von seiner Intensität her so dimensioniert ist, daß die beiden einander zugewandten Flächen der Abflachung 17 und des Steges 18 sich erwärmen und zu schmelzen beginnen. Dadurch verschmelzen an dieser Stelle umlaufend das Drosselklappengehäuse 2 mit dem Gehäusedeckel 9, so daß das unter dem Gehäusedeckel 9 liegende Getriebegehäuse 6 sowie das Antriebsgehäuse 7 dichtend verschlossen werden. Das Einlegen und Montieren einer Dichtung kann entfallen. Der Gehäusedeckel 9 ist mit dem Drosselklappengehäuse 2 unlösbar verbunden, das heißt, er kann ohne Zerstörung der beteiligten Bauteile nicht wieder von dem Drosselklappengehäuse 2 gelöst werden. Dies hat neben der absoluten Dichtheit noch den Vorteil, daß alle Bauteile, die in diesem Räumen angeordnet sind, vor Manipulationen geschützt sind. Dies ist insbesondere dann von Vorteil, wenn in dem Drosselklappengehäuse 2, abgedeckt von dem Gehäusedeckel 9, eine elektronische Steuereinheit untergebracht ist.

Der in Figur 3 gezeigte Gehäusedeckel 9 weist noch ein Gegenlager 21 auf, mit dem die Antriebswelle des nicht gezeigten Elektromotors gelagert ist. Genauso kann mittels eines Gegenlagers 22 auch die Drosselklappenwelle 4 gegengelagert sein.

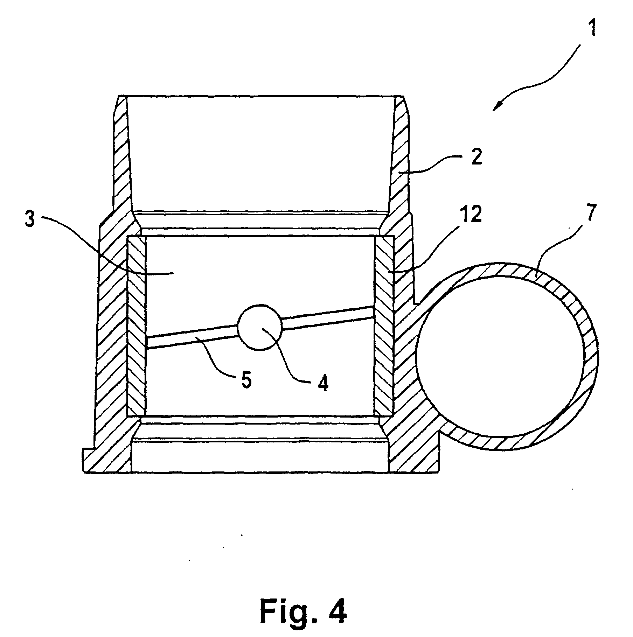

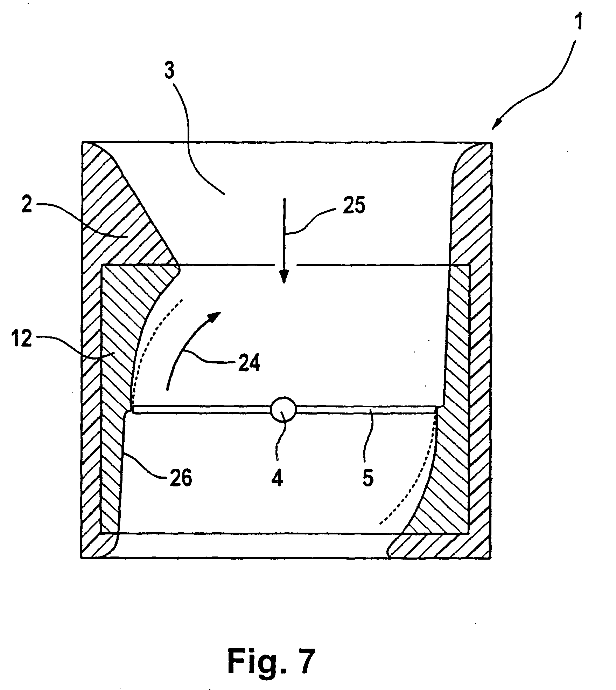

Figur 4 zeigt den Drosselklappenstutzen 1 im Längsschnitt gemäß der Figur 1. Hier ist erkennbar, daß der Metallzylinder 12 als einfacher Zylinder ausgebildet ist, dessen Außenumfangsfläche und zumindest ein Teil der Stirnflächen von dem Kunststoff des Drosselklappengehäuses 2 umgeben ist. Die nach innen weisende Innenwandung des Metallzylinders 12 ist gradlinig ausgebildet, kann aber auch zur Realisierung vorgebbarer Kennlinien für den Volumendurchsatz konturiert sein. Solche Ausgestaltungen sind zum Beispiel in der Figur 7 gezeigt. In Figur 4 ist die Drosselklappe 5 in ihrer Schließstellung gezeigt und kann durch Verdrehen entgegen dem Uhrzeigersinn in eine geöffnete Stellung gebracht werden, wobei eine Drehung um etwa 90° (das heißt bis in eine bei Betrachtung der Figur 4 in etwa senkrechte Position) der Voll-Laststellung entspricht.

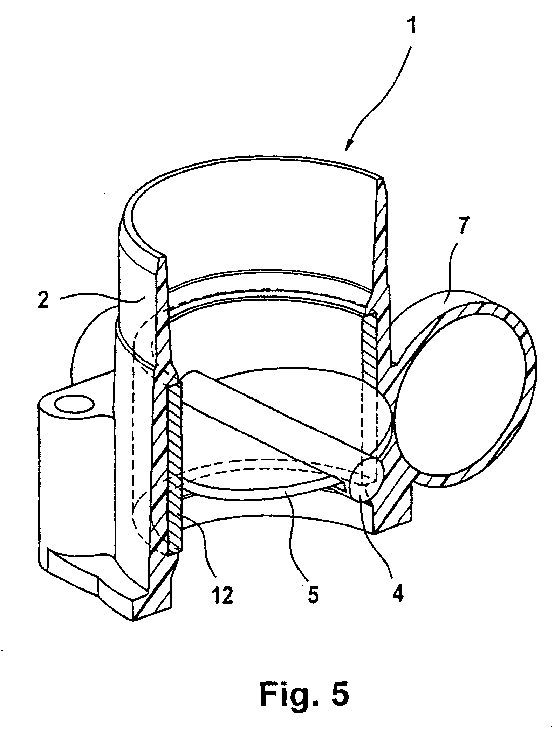

Figur 5 zeigt den Drosselklappenstutzen 1 gemäß Figur 1 in geschnittener, dreidimensionaler Ansicht, wobei wiederum die Anordnung des Metallzylinders 12 in dem Drosselklappengehäuse 2 sichtbar ist. Ebenfalls erkennbar ist eine Möglichkeit der Montage der Drosselklappe 5 an der Drosselklappenwelle 4. Die Drosselklappenwelle 4 weist einen Schlitz auf, in den die Drosselklappe 5 einsteckbar ist, wobei die Drosselklappe 5 nach Ausrichtung in ihrer Sollposition an der Drosselklappenwelle 4 unbewegbar fixiert wird. Dies kann beispielsweise durch Stifte oder Schrauben erfolgen, die durch die Drosselklappenwelle 4 und die Drosselklappe 5 gesteckt werden. Alternativ dazu kann die Drosselklappe 5 auch in dem Schlitz mit der Drosselklappenwelle 4 verstemmt oder verklebt werden.

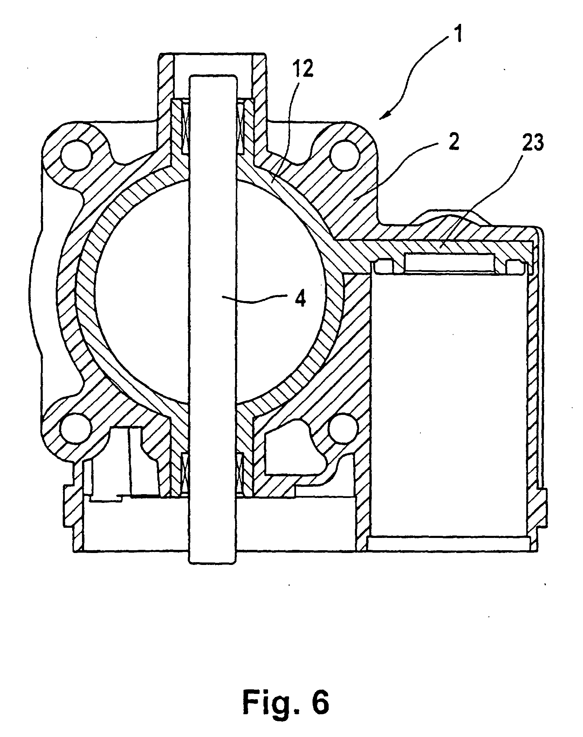

Figur 6 zeigt den Drosselklappenstutzen 1 im Schnitt in einer abgewandelten Ausführung gegenüber Figur 1, wobei erkennbar ist, daß der Metallzylinder 12 nicht nur die Fortsätze 14 zur Aufnahme der Lager 15, 19 für die Drosselklappenwelle 4 aufnimmt, sondern auch einen Lagerschild 23 umfaßt, der ein Ende des als Elektromotor ausgebildeten Stellantriebes aufnimmt. Dadurch erhöht sich die Festigkeit, wobei als weiterer Vorteil zu nennen ist, daß über das Lagerschild 23 eine beim Betrieb des Elektromotors entstehend Verlustwärme an die Innenwandung des Metallzylinders 12 geführt wird, wobei an dieser Stelle die Verlustwärme durch die den Leitungsabschnitt 3 durchströmende Luft (oder das Kraftstoffluftgemisch) abgeführt wird. Somit werden durch das Lagerschild 23 auch die thermischen Eigenschaften des Drosselklappenstutzens 1 verbessert.

Figur 7 zeigt den Drosselklappenstutzen 1 im Längsschnitt gemäß Figur 1, wobei hier der Metallzylinder 12 mit einer Innenkontur gezeigt ist. In der Figur 7 ist nochmals deutlich zu erkennen, daß der Metallzylinder 12 in das Drosselklappengehäuse aus Kunststoff so eingesetzt ist beziehungsweise derart von dem Kunststoff umgeben ist, daß der Metallzylinder 12 sicher in dem Drosselklappengehäuse 2 gehalten ist, während die Innenwandung des Metallzylinders 12 nicht von Kunststoff bedeckt ist, also die metallischen Eigenschaften beibehalten werden. Die Drosselklappe 5 ist durch Drehung der Drosselklappenwelle 4 - bei Betrachtung der Figur 7 im Uhrzeigersinn - in eine Schwenkrichtung 24 aus der in Figur 7 gezeigten Minimalstellung, in der der Leitungsabschnitt 3 vollständig oder nahezu vollständig verschlossen ist, verschwenkbar. Die den Leitungsabschnitt 3 durchströmende Luft (oder das Kraftstoffluftgemisch) hat eine Strömungsrichtung 24. Durch Verschwenken der Drosselklappe 5 in Schwenkrichtung 24 wird der Leitungsabschnitt 3 mit zunehmender Verschwenkung weiter geöffnet, so daß durch eine Innenkontur 26 des Metallzylinders 12 eine Kennlinie des den Leitungsabschnitt 3 durchströmenden Volumens in Abhängigkeit von dem Öffnungswinkel der Drosselklappe 5 einstellbar ist. Durch unterschiedliche Innenkonturen 26, die mit verschiedenen Metallzylindern 12 realisierbar sind, können somit bei Beibehaltung eines standardisierten Drosselklappengehäuses 2 auf einfache Art und Weise unterschiedliche, dem jeweiligen Brennkraftmaschinen-Typ angepaßte Kennlinien realisiert werden. Die in Figur 7 gezeigte Innenkontur 26 des Metallzylinders 12 ist oberhalb und unterhalb der Drosselklappenwelle 4 symmetrisch, wobei in Schwenkrichtung 24, ausgehend von der in Figur 7 gezeigten Minimalstellung (oder auch Nullstellung) der Drosselklappe 5 die Innenkontur 26 zunächst einen geradzylindrischen Abschnitt aufweist, dem sich ein kreisbogenförmiger Abschnitt anschließt.

Es ist anzustreben, daß im Übergangsbereich zwischen der Innenwandung des Leitungsabschnittes 3 und der Innenwandung des Metallzylinders 12 kein Absatz vorhanden ist, um Verwirbelungen der Luft oder des Kraftstoffluftgemisches in Strömungsrichtung 25 zu vermeiden.

Es wird jedoch darauf hingewiesen, daß die in Figur 7 gezeigte Innenkontur 26 des Metallzylinders 12 nur beispielhaft ist und beliebige andere Konturen (auch oberhalb und unterhalb der Ebene der Drosselklappenwelle 4 asymmetrische Konturen) beim Herstellen und/oder beim Bearbeiten des Metallzylinders 12 erzielbar sind.

### Bezugszeichenliste

1. Drosselklappenstutzen
2. Drosselklappengehäuse
3. Leitungsabschnitt
4. Drosselklappenwelle
5. Drosselklappe
6. Getriebegehäuse
7. Antriebsgehäuse
8. Stecker
9. Gehäusedeckel
10. Flansch
11. Bohrung
12. Metallzylinder
13. Durchführung
14. Fortsatz
15. Lager
16.Raum
17.Abflachung
18. Steg
19.Lager
20.Laserstrahl
21. Gegenlager
22. Gegenlager
23. Lagerschild
24. Schwenkrichtung
25. Strömungsrichtung
26. Innenkontur

## Patentansprüche

1. Drosselklappenstutzen (1), mit einen von einem Gehäusedeckel (9) verschließbaren Gehäuse insbesondere Drosselklappengehäuse (2), das von einem Gehäusedeckel (9) verschlossen ist, wobei sowohl das Gehäuse als auch der Gehäusedeckel (9) aus Kunststoff bestehen und das Gehäuse und der Gehäusedeckel (9) nach dem Zusammenfügen unlösbar miteinander verbunden sind, und mit einem Antriebsgehäuse (7) zur Aufnahme einer Antriebseinheit, **dadurch gekennzeichnet, dass** die Verbindung des Gehäuses und des Gehäusedeckels (9) durch die unlösbare Verbindung gegeneinander abgedichtet ist und dass das Gehäuse eine einstückige Baueinheit aus Getriebegehäuse (6) und Antriebsgehäuse (7) aufweist und der Gehäusedeckel (9) das Antriebsgehäuse (7) und das Getriebegehäuse (6) gemeinsam verschließt und dass in das Gehäuse oder dem Gehäusedeckel (9) ein Stecker (8) oder eine Buchse aus Kunststoff eingesetzt ist und innerhalb das Gehäuses betätigte elektronische Bauelemente angeordnet sind so dass die beteiligten Bauelemente vor unberechtigtem Zugriff geschützt sind, und dass das Gehäuse oder der Gehäusedeckel (9) mit dem stecker (8) oder der Buchse unlösbar verbunden ist.

2. Gehäuse nach Anspruch 1, **dadurch gekennzeichnet, daß** die unlösbare Verbindung eine Klebeverbindung ist.

3. Gehäuse nach Anspruch 1 oder 2, **dadurch gekennzeichnet, daß** die unlösbare Verbindung mittels Laserschweißen hergestellt wird.

4. Gehäuse nach Anspruch 1, 2 oder 3, **dadurch gekennzeichnet, daß** die unlösbare Verbindung mittels Ultraschallschweißen hergestellt wird.

5. Gehäuse nach einem der vorhergehenden Ansprüche, **dadurch gekennzeichnet, daß** in das Gehäuse und/oder in den Gehäusedeckel (9) eine Trägerplatte eines Drosselklappen-Potentiometers aus Kunststoff einsetzbar ist und mit diesem unlösbar verbunden wird.

## Claims

1. Throttle body (1) with a housing which can be closed by a housing cover (9), in particular a throttle housing (2) which is closed by a housing cover (9), wherein both the housing and the housing cover (9) are composed of plastic and are connected permanently to one another after being assembled, and with a drive housing (7) for accommodating a drive unit, **characterized in that** the connection between the housing and the housing cover (9) is sealed by virtue of the permanent joint between the two components, and **in that** the housing has a structurally integral unit comprising gear housing (6) and drive housing (7), and the housing cover (9) jointly closes off the drive housing (7) and the gear housing (6), and **in that** a plug (8) or a socket of plastic is inserted into the housing or the housing cover (9), and electronic components involved are arranged inside the housing, so that the components involved are protected from unauthorized access, and **in that** the housing or the housing cover (9) is permanently connected to the plug (8) or the socket.

2. Housing according to Claim 1, **characterized in that** the permanent joint is an adhesive joint.

3. Housing according to Claim 1 or 2, **characterized in that** the permanent joint is produced by means of laser welding.

4. Housing according to Claim 1, 2 or 3, **characterized in that** the permanent joint is produced by means of ultrasonic welding.

5. Housing according to one of the preceding claims, **characterized in that** a carrier plate of a throttle-valve potentiometer made of plastic can be inserted into the housing and/or the housing cover (9) and is connected permanently to it.

## Revendications

1. Tubulure de clapet de régulation (1 ), avec un carter pouvant être fermé par un couvercle de carter (9), n otamment carter d e clapet d e régulation (2) fermé par un couvercle de carter (9), où non seulement le carter, mais aussi le couvercle de carter (9) sont en matière plastique et où le carter et le couvercle du carter (9) sont, après l'assemblage, liés l'un à l'autre d'une manière indissoluble, et comportant un carter d'un entraînement (7) destiné à recevoir une unité d'entraînement,
**caractérisé par le fait que** la liaison entre le carter et le couvercle du carter (9) est rendue étanche par la liaison indissoluble, que le carter comporte une unité constructive en une seule pièce composée du carter de l'engrenage (6) et du carter de l'entraînement (7), que le couvercle du carter (9) enferme en commun le carter de l'entraînement (7) et le carter de l'engrenage (6), que, dans le carter ou le couvercle du carter (9), un connecteur (8) ou une prise en matière plastique sont insérés, que des composants électroniques intervenants sont disposés à l'intérieur du carter, de telle manière que les composants intervenants sont protégés contre un accès non autorisé, et que le carter ou le couvercle du carter (9) sont liés d'une façon indissoluble au connecteur (8) ou à la prise.

2. Carter selon la revendication 1
**caractérisé par le fait que** la liaison indissoluble est une liaison collée.

3. Carter selon la revendication 1 ou 2
**caractérisé par le fait que** la liaison indissoluble est fabriquée par soudage au laser.

4. Carter selon la revendication 1, 2 ou 3
**caractérisé par le fait que** la liaison indissoluble est fabriquée par soudage aux ultrasons.

5. Carter selon l'une des revendications précédentes
**caractérisé par le fait qu'**il est possible d'insérer, dans le carter et/ou dans le couvercle du carter (9), une carte en matière plastique supportant un potentiomètre de clapet de régulation et qu'elle est liée à ceux-ci d'une façon indissoluble.
